Europäisches Patentamt

(19) European Patent Office

Office européen des brevets

(11) Publication number : **0 292 282 B1**

(12) **EUROPEAN PATENT SPECIFICATION**

(45) Date of publication of patent specification :
02.01.92 Bulletin 92/01

(51) Int. Cl.⁵ : **C02F 1/04**

(21) Application number : **88304542.9**

(22) Date of filing : **19.05.88**

(54) **Method of treating photographic process waste liquor through concentration by evaporation.**

(30) Priority : **19.05.87 JP 121743/87**
**19.05.87 JP 121744/87**

(43) Date of publication of application :
**23.11.88 Bulletin 88/47**

(45) Publication of the grant of the patent :
**02.01.92 Bulletin 92/01**

(84) Designated Contracting States :
**DE FR GB IT NL**

(56) References cited :
**EP-A- 0 223 605**
**BE-A- 843 721**
**US-A- 3 995 298**
**US-A- 4 640 769**
**US-A- 4 724 044**
**PATENT ABSTRACTS OF JAPAN, vol. 7, no. 11**
**(C-145)[1156], 18th January 1983; & JP-A-57**
**167 786 (HAJIME NAKATOU) 15-10-1982**
**PATENT ABSTRACTS OF JAPAN, vol. 12, no.**
**32 (P-661)[2879], 30th January 1988; & JP-A-62**
**184 459 (KONISHIROKU PHOTO IND. CO., LTD)**
**12-08-1987**

(73) Proprietor : **KONICA CORPORATION**
**26-2, Nishishinjuku 1-chome, Shinjuku-ku**
**Tokyo 160 (JP)**

(72) Inventor : **Takabayashi, Naoki**
**c/o Konica Corporation 1 Sakuramachi**
**Hino-shi Tokyo (JP)**
Inventor : **Goto, Nobutaka**
**c/o Konica Corporation 1 Sakuramachi**
**Hino-shi Tokyo (JP)**
Inventor : **Koboshi, Shigeharu**
**c/o Konica Corporation 1 Sakuramachi**
**Hino-shi Tokyo (JP)**
Inventor : **Kurematsu, Masayuki**
**c/o Konica Corporation 1 Sakuramachi**
**Hino-shi Tokyo (JP)**

(74) Representative : **Ellis-Jones, Patrick George**
**Armine et al**
**J.A. KEMP & CO. 14 South Square Gray's Inn**
**London WC1R 5EU (GB)**

## Description

This invention relates to a method of concentrating waste liquor produced concomitantly with development processing of light-sensitive photographic materials using an automatic photographic processing machine (hereinafter referred to as "photographic process waste liquor" or "waste liquor") and more particularly, to a method using apparatus which is installed inside the automatic processing machine or in the vicinity thereof.

In general, photographic processing of light-sensitive silver halide photographic materials is carried out in steps employing processing solutions having one or more functions such as fixing and washing in the case of black and white materials, or color developing, bleach-fixing (or bleaching and fixing), washing and stabilizing in the case of color materials.

In processing a large quantity of light-sensitive materials, the performance of processing solutions is constantly maintained, while replenishing components consumed by the processing, by removing components that may be thickened or concentrated during the processing by precipitating out in the processing solution or by evaporation (for example, bromide ions in the developing solution or silver complex salts in the fixing solution). A replenishing solution is supplied to the processing solution for the replenishing, and part of the processing solution is thrown away to remove the thickened or concentrated components.

In recent years, because of environmental pollution or for economic reasons, replenishing solutions as well as washing water, which is a replenishing solution for washing, are changing in that the quantity of replenishment has been greatly decreased. The photographic process waste liquor, however, is led from a processing thank of the automatic processing machine through a waste liquor pipe and thrown away in, to example, drains after having been diluted with waste washing water or cooling water from the automatic processing machine.

However, because of tightened regulations in recent years against environmental pollution, although it is possible to throw away washing water or cooling water in drains or rivers, it has been made substantially impossible to throw away photographic processing solutions other than these [for example, developing solutions, fixing solutions, color-developing solutions, bleach-fixing solutions (or bleaching solutions or fixing solutions) or stabilizing solution]. For this reason, every photographic processing dealer has the waste liquor collected by dealers specialized in waste liquor treatment or installs equipment for pollution-preventive treatment. However, placing the waste liquor with dealers necessarily requires considerable space for storing the waste liquor and may also be very expensive. Additionally the equipment for pollution-preventive treatment has the disadvantage that it requires very large initial investment and a large area for installation.

Accordingly, in general, the waste liquor is collected by waste liquor collecting dealers, and made harmless after secondary and tertiary treatments. However, because of an increase in cost for collection, not only are the fees for taking over the waste liquor increasing year by year, but also the dealers are not willing to come to collect waste liquor from mini photofinishing laboratories because of low collection efficiency. This causes problems in that the shops are full of waste liquor.

To solve these problems and to make it possible to readily carry out treatment of photographic process waste liquor in mini photofinishing laboratories, it has been proposed to heat the liquor, to evaporate the water, to dryness or to effect solidification as disclosed, for example, in Japanese Unexamined Utility Model Publication No. 70841/1985.

As known from studies and experiments by the inventors, harmful or very ill-smelling gases such as sulfite gas, hydrogen sulfide and ammonia may be generated when the photographic process waste liquor is continually subjected to the evaporation treatment at temperatures higher than the boiling point. These were found to be generated because ammonium thiosulfate and sulfites (e.g. the ammonium sodium or potassium salt) frequently used in the fixing solution or bleach-fixing solution decompose at the high temperatures. Moreover, at the time of the evaporation, water, for example, contained in the liquor is vaporized which increases the volume and pressure in the evaporating vessel.

Because of this pressure the above harmful or ill-smelling gases may leak outside the evaporation treatment apparatus which causes great difficulties in the work environment.

To solve these problems, Japanese Unexamined Utility Model Publication No. 70841/1985 disclosed a method in which an exhaust gas treating section, for example comprising activated carbon, is provided at an exhaust pipe section of the evaporation treatment apparatus. This method, however, has a serious disadvantage in that the vapor from a large quantity of water contained in the liquor causes sweating or moisture condensation at the exhaust gas treating section, so that the gas absorption treatment agent is covered with the water. The agent therefore instantaneously loses its gas absorption ability. Thus, this method has not been put into practical use.

To solve these problems, the present inventors have previously proposed a method using an apparatus in which there is provided a cooling and condensing means to condense the vapor generated by the evaporation and the condensate liquid and uncondensed components are simultaneously treated before they are dis-

2

charged to the outside.

However, there is the disadvantage that the evaporation of sulfur containing ill-smelling gas is generated in a greatly increasing amount with increase in the degree of the concentration by the concentration treatment. In addition, with increase in the amount of generation of this sulfur containing ill-smelling gas, free sulfur may also begin to be generated, so that the condensate liquor cannot be thrown away in, to example, drains.

This invention has been made taking account of the above problems. The present invention seeks to provide a method of concentrating photographic process waste liquor that can suppress the generation of ill smelling and free sulfur and other compounds which occurs at the time of the treatment, and also to provide a method which can be used safely and efficiently.

The present inventors made various studies and experiments in order to suppress the generation of sulfur containing ill-smelling gas. As a result, they found that the generation of ill-smelling hydrogen sulfite or free sulfur can be suppressed if the temperature at the time of the evaporation is positively lowered such that the photographic process waste liquor does not boil and the vapour thereby generated is condensed. This is most effective and moreover most suitable from the viewpoint of safety and efficient operation of the apparatus as evaporation at temperatures lower than the boiling point can be effected with ease.

The present invention provides a method of concentrating photographic process waste liquor which comprises heating the liquor to evaporate at least part thereof, characterised in that the evaporation is initially carried out at the boiling point of the liquor and subsequently carried out at a temperature lower than the boiling point of the liquor, and the vapour produced by the evaporation is condensed.

Fig. 1 is a schematic illustration of an automatic processing machine to which apparatus for concentrating photographic process waste liquor in accordance with the method of the present invention has been applied.

Fig. 2 is a schematic constitutional illustration showing an example of the apparatus which may be med for carrying out the method of this invention ;

Fig. 3 and Fig. 4 are schematic constitutional illustrations showing other examples ; and

Fig. 5 is a schematic constitutional illustration showing the main part of a comparative apparatus.

In the invention, the concentration preferably reduces the volume of the waste liquor to 1/2 or less of the initial volume of the waste liquor from the processing tanks. Since the liquor is throw away, the concentration is preferably carried out to a degree of 1/4 or less, most preferably 1/10 or less. The concentration, for example, brings about precipitation, or generation of, for example, tar. As a whole liquid, it has fluidity, or liquid one is a concentrate.

The concentration means may have any shape, for example a cube, a column, a polygonal pillar including a square pillar, a cone, a polygonal pyramid including a quadrangular pyramid, or a combination of some of these. It is preferably long in the longitudinal direction so that the difference between the temperature in the vicinity of the heating means and the temperature of the liquor at the bottom part is greater. More preferably, the space above the liquor surface is as great as possible so as to reduce as far as possible accidental blowing-off or spouting caused by bumping.

The concentration means may be made of any material so long as it is heat-resistant, such as heat-resistant glass, titanium, stainless steel and carbon steel. However, from the viewpoints of safety and corrosion resistance, stainless steel (preferably SUS 304 or SUS 316) and titanium are preferred.

Temperatures for the concentration process are preferably from 30°C to 95°C, more preferably from 35°C to 90°C, still more preferably from 40°C to 80°C, which are temperatures at which the liquor does not boil. Taking account of the thermal efficiency, gas containing the evaporated component may be fed back to the concentration means in an account which is preferably form 1 litre to 300 litres, more preferably 3 litres to 200 litres, 4.19 kJ (1 kcal) provided by the heating means.

The temperature for the concentration is preferably changed when the concentration has been carried out to 1/1.5 or less. For example, the temperature for the concentration is preferably from 30°C to 90°C when the waste liquor has been concentrated to 1/2 or less, and is preferably from 40°C to 80°C when it has been concentrated to 1/3 or less. The evaporation is effected at the boiling point at the time treatment is started, so that the evaporation treatment time can be shortened.

The means for carrying out the concentration according to this invention include a heating means, at least one of a means for cooling and a means for stopping the heating, and a means for detecting the temperature, to keep the temperature constant. Alternatively, the temperature need not be detected, and in a steady state, for example, the capacity of the heater may be controlled by heat dissipation or cooling so that the temperature is kept constant.

As the heating means any known method can be used, it may comprise a nichrome wire, or complete heaters such as a cartridge heater, a quartz heater, a Teflon heater, a rod heater and a panel heater. The heating means may be provided in the waste liquor in the evaporation means. In order to enhance the effect of this invention and at the same time prevent a decrease in thermal efficiency or corrosion that may occur when the liquor is burnt and sticks to the surface of the heating means, it is preferable to provide the heating means outside evaporation means and heat the waste liquor in the evaporation vessel through the wall of the evaporation means.

The heating means may be provided at any position so long as the waste liquor in the evaporation means can be heated, but, as described in Japanese Patent Application No. 288328/1986, the heating means is preferably provided such that the upper part of the liquor in the evaporation means is heated to cause a difference between the temperature of the liquor in the vicinity of the heating means and the temperature at the bottom part of the liquor. In order to enhance the effect of this invention, the heating means is preferably provided such that this temperature difference is 5°C or more.

As the cooling means any known method can be used. It includes coolers such as an air-bubbling chiller, cooling water, or pre-treatment waste liquor. It is preferred to use a method in which the concentration of the liquor at the time of the treatment is not lowered.

For condensing the vapor generated by the concentration method of this invention, all sorts of heat exchange means can be employed, and they may be of any constitution including :
(1) a shell and tube type (or multi-type or thimble type) ;
(2) a double tube type ;
(3) a coil type ;
(4) a helical type ;
(5) a plate type ;
(6) a fin tube type ;
(7) a trombone type ; and
(8) an air cooling type ;
Techniques for heat exchange type reboilers may also be used, and there may, for example, be employed:
(1) a vertical thermosiphon type ;
(2) a horizontal thermosiphon type ;
(3) an overflow type (kettle type) ;
(4) a forced circulation type ; and
(5) an interpolation type ;
Techniques for condenser type heat exchange may further be employed, and there may, for example, be used any of :
(1) a direct condenser type ;
(2) a built-in-column type ;
(3) a built-on-top column type ; and
(4) a separate type ;
It is also possible to use coolers, and the types of the coolers can be arbitrarily selected.
Air cooling type heat exchangers may be also used advantageously, and there may be used any of :
(1) a forced draft type ; and
(2) a blowing draft type.

A preferred embodiment is such that the cooling-condensing means is a heat dissipation plate device provided with a heat dissipation plate (or an air-cooling fan) on a vapor discharge pipe for discharging the vapor formed by evaporation of the liquor, an which has a means for feeding water on the heat dissipation plate. In this instance, the water is preferably fed on the heat dissipation plate from an upper part of the heat dissipation plate device. The water may be fed, for example, from a city water cock through a valve, for example a solenoid valve, if necessary. In this instance, the means for feeding water refers to, for example, a city water cock or a water feeding pipe. However, it is preferred to use stored water, which is preferably fed on the heat dissipation plate through a water-feeding means including a constant rate pump or non-constant rate pump. It is particularly preferred to constitute the means such that stored water is circulated from a stored water tank provided at a lower part of the heat dissipation plate device and fed in a shower form on the heat dissipation plate through a pump and again stored in the stored water tank. In this instance, it is desired that a liquid level sensor is provided in the stored water tank such that shortage of the stored water can be detected by sending a signal when the liquid level becomes lower than a given level, and the water is again fed.

The cooling-condensing means is preferably constituted with a heat dissipation plate device provided with the heat dissipation plate (or air cooling fan) on the vapor discharge pipe for discharging the vapor formed in the evaporation. When there is provided means for feeding water on the heat dissipation plate, there is simultaneously provided a fan for air cooling. However, in this instance, it is particularly preferred that the fan is provided such that the air can be discharged outside the concentration apparatus through the heat dissipation plate device, as it is thereby possible to prevent condensation from occuring in the electric equipment sections in

EP 0 292 282 B1

the apparatus.

The condensate liquid obtained by cooling and condensing the vapor formed by evaporation is stored in a tank (i.e. a stored liquid tank). The stored liquid tank is preferably provided inside the concentration apparatus as space can be thereby saved. In this instance the stored liquid tank is preferably placed on a pedestal capable of being pulled out, to improve workability.

The concentration apparatus has means for cooling and condensing the vapor formed by evaporation. For the condensate liquid obtained, care should be taken that (1) at least one secondary treatment selected from the following (A) to (J) is applied to the condensate liquid : (A) adsorptive treatment, (B) ultraviolet exposure treatment, (C) reverse osmosis treatment, (D) oxidizing agent treatment, (E) electrolytic oxidation treatment, (F) aeration treatment, (G) electrodialysis treatment, (H) redistillation treatment, (I) ion exchange resin treatment and (J) pH adjustment, and (2) the condensate liquid is used as dissolving water for photographic processing solutions.

Activated carbon can be used as an adsorptive material in the adsorption treatment, as well as :

(1) clay materials ;

(2) polyamide type polymeric compounds ;

(3) polyurethane type polymeric compounds ;

(4) phenol resin ;

(5) epoxy resin ;

(6) polymeric compounds having a hydrazide group ;

(7) polymeric compounds having a polytetrafluoroethylene group ;

(8) mono- or polyhydric alcohol methacrylic acid monoester-polyhydric alcohol methacrylic acid ; and

(9) polyester copolymers.

Details of the materials (1) to (9) are available in Japanese Unexamined Patent Publication No. 4051/1986.

The constitution of the evaporation means, heating means and condensation means is further described in detail in Japanese Patent Applications No. 69435/1987, No. 69436/1987 and No. 69437/1987 filed by the present applicant.

This vapor condensation not only makes it easier to decrease the generation of the sulfur containing gas outside the system, but also enhances the evaporation rate and accelerates the evaporation at the boiling point or lower.

As the above-mentioned means for stopping the heating, there can be used any known means such as turning off an electric source for a heater and closing a valve of a burner when used.

As the above-mentioned means for detecting the temperature of the concentration, there can be used any known method to measure the temperature of the liquor when the evaporation treatment is carried out. For example, the means may include resistance thermometers, thermisters, thermocouples, semiconductor-applied sensors, oscillation-applied rock crystal temperature sensors, thermometers as exemplified by a NOR thermometer utilizing expansion of a material and thermometers using changes in susceptibility. It is preferred it possible to electrically control the apparatus using means which provide a "signal".

An example of the method of concentrating liquor is described below with reference to the accompanying drawings.

A) Automatic processor :

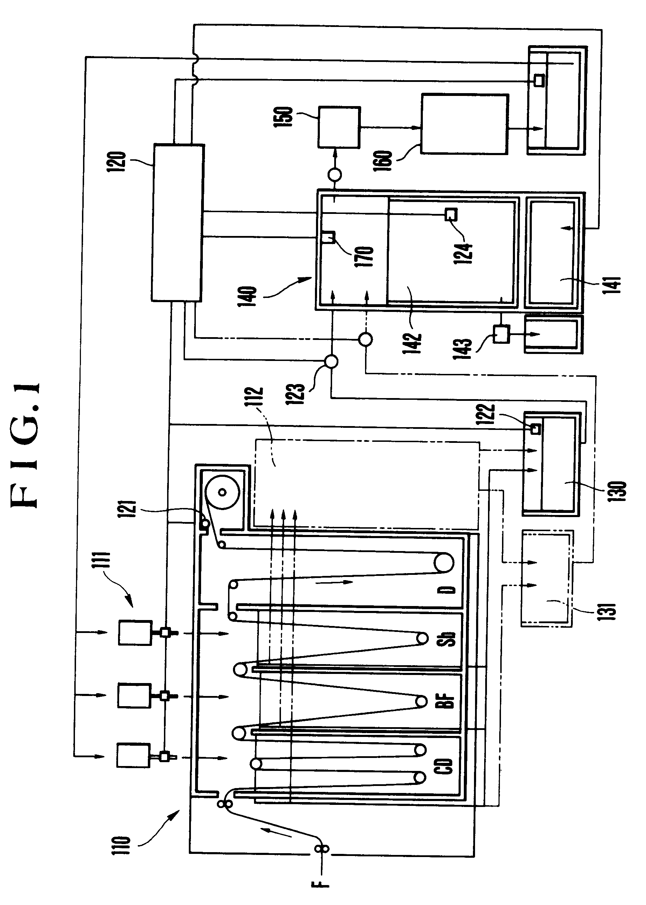

The automatic processing machine is denoted by the numeral 110 in Fig. 1. A rolled light-sensitive photographic material F is continously guided to a color-developing tank CD, a bleach-fixing tank BF and a washing-substitutive stabilizing tank Sb to effect photographic processing, and rolled up after drying with use of a drying tank D. The numeral 111 denotes replenishing solution tanks. The amount of the material F processed is detected by a sensor 121, and replenishing solutions are supplied to respective processing tanks according to a command from a controlling device 120 on the basis of the detected information.

B) Photographic process waste liquor :

Examples of the photographic processing solutions on which the treatment according to this invention can be carried out will now be described in detail. Photographic processing solutions mainly described are those used when the photographic materials to be processed are for color photography. Almost all photographic process waste liquor is overflow solution when a light-sensitive silver halide color photographic material is processed with these photographic processing solutions.

A color developing solution is a processing solution used in color development processing (i.e., a step forming a color image, specifically a step forming a color dye image by the coupling reaction between an oxidized

5

EP 0 292 282 B1

product of a color developing agent and a color coupler). Accordingly it is usually necessary in the step of color development processing to incorporate the color developing agent in the color developing solution, but it is possible to incorporate the color developing agent in the color photographic material and carry out the processing with a color developing solution or alkaline solution (activator solution) containing the color developing agent. The color developing agent contained in the color developing solution is an aromatic primary amine color developing agent, including derivatives of the aminophenol type and the p-phenylenediamine type.

The above aminophenol type developing agent includes, for example, o-aminophenol, p-aminophenol, 5-amino-2-oxy-toluene, 2-amino-3-oxy-toluene and 2-oxy-3-amino-1,4- dimethyl-benzene.

The color developing solution may contain an alkaline agent usually used in developing solutions, and may also contain various additives, for example, benzyl alcohol and a halogenated alkali metal, or a development controlling agent and a preservative. It may further contain any anti-foaming agent or surface active agent, and an organic solvent such as methanol, dimethylformamide or dimethylsulfoxide.

The color developing solution may also contain an antioxidant if necessary. In the color developing solution, various chelating agents may also be further used in combination, as a sequestering agent.

A bleach-fixing solution is a processing solution used in the step of bleach-fixing (a step of oxidizing metallic silver formed by development to convert it to a silver halide, and then forming a water soluble complex and at the same time effect dye formation at a non-image portion of a coupler). Any bleaching agent may be used in the bleach-fixing solution.

The bleach-fixing solution may also contain any pH buffering agent alone or in combination of two or more. It may additionally contain any brightening agent, anti-foaming agent or surface active agent. It may also appropriately contain a preservative such as a bisulfite addition product, an organic chelating agent such as aminopolycarboxylic acid, a stabilizer such as nitroalcohol and nitrous acid, and an organic solvent. There may be further added to the bleach-fixing solution any bleaching accelerator described in, for example, Japanese Unexamined Patent Publications No. 280/1971, No. 8506/1970 and No. 556/1971, Belgian Patent No. 770,910, Japanese Patent Publications No. 8836/1970 and No. 9854/1978 and Japanese Unexamined Patent Publications No. 71634/1979 and No. 42349/1974.

Washing-substitutive stabilizing processing may be combined, whereby the quantity of the waste liquor from the processing can be advantageously reduced.

The stabilizing treatment carried out using the washing-substitutive stabilizing solution is not a conventional processing in which a large quantity of running water is used to wash away the processing solution of a previous stage that has adhered to or impregnated into a light-sensitive photographic material, but a processing that can have a function equal or superior to the above by replenishing the stabilizing solution in an amount as small as 30 ml/m$^2$ to 9,000 ml/m$^2$, preferably 60 ml/m$^2$ to 3,000 m/m$^2$, per unit area. Specifically, this refers to the process as described in Japanese Unexamined Patent Publication No. 134636/1983.

Accordingly, it is not required to provide a feeding/discharging pipe for the washing to the outside of the automatic processing machine as in conventional cases.

The stabilizing solution includes stabilizing solutions which stabilize a color image and function as a hydro-extracting bath for preventing stains such as washing non-uniformity. A color controlling solution for coloring the color image and an antistatic solution containing an antistatic agent are also included in the stabilizing solutions. When bleach-fixing components are brought into the stabilizing solution from a previous bath, measures are taken to neutralize, desalt and inactivate these so as not to deteriorate the storage stability of dyes.

Components contained in such a stabilizing solution include chelating agents having a stability constant to iron ions of 6 or more (particularly preferably 8 or more). These chelating agents include organic carboxylic acid chelating agents, organic phosphoric acid chelating agents, polyhydroxyl compounds and inorganic phosphoric acid chelating agents. Particularly preferable for the effect of this invention are diethylenetriaminetetraacetic acid, 1-hydroxyethylidene-1,1-diphosphonic acid, and salts of these. These compounds are preferably used in a concentration of 0.1 g to 10 g per liter of the stablilizing solution, more preferably 0.5 g to 5 g per liter of the stabilizing solution.

The compounds added to the stabilizing solution include ammonium compounds. These are supplied by ammonium salts of various inorganic compounds, and include ammonium hydroxide, ammonium bromide, ammonium carbonate, ammonium chloride, ammonium hypophosphite, ammonium phosphate, ammonium phosphite, ammonium fluoride, acid ammonium fluoride, ammonium fluoroborate, ammonium arsenate, ammonium hydrogencarbonate, ammonium hydrogen fluoride, ammonium hydrogensulfate, ammonium sulfate, ammonium iodide, ammonium nitrate, ammonium pentaborate, ammonium acetate, ammonium adipate, ammonium lauryltricarboxylate, ammonium benzoate, ammonium carbamate, ammonium citrate, ammonium diethyldithiocarbamate, ammonium formate, ammonium hydrogenmalate, ammonium hydrogenoxalate, ammonium hydrogenphthalate, ammonium hydrogentartarate, ammonium lactate, ammonium malate, ammonium maleate, ammonium oxalate, ammonium phthalate, ammonium pirate, ammonium pyroli-

6

dinedithiocarbamate, ammonium salicylate, ammonium succinate, ammonium sulfanilate, ammonium tartalate, ammonium thioglycolate and ammonium 2,4,6-trinitrophenol.

These ammonium compounds may be used in an amount from 0.05 to 100 g per litre of the stabilizing solution.

Other compounds which may be added to the stabilizing solution include pH adjusters, mildew-proofing agents such as 5-chloro-2-methyl-4-isothiazolin-3-one, 2-octyl-4-isothiazolin-3-one and 1-2-benzisothiazolin-3-one, as well as those described in Japanes Unexamined Patent Publication No. 43741/1986, preservatives such as water-soluble metallic salts, dispersing agents such as ethylene glycol, polyethylene glycol and polyvinyl pyrrolidone (e.g. PVP K-15 and Rubiscol K-17), hardening agents such as formalin and brightening agents.

In this invention it is particularly preferred to use a washing-substitutive stabilizing solution containing any of the above mildew-proofing agents as less tar may be produced in the concentration apparatus when they are used.

When the light-sensitive materials are for use as negatives, an aldehyde derivative may be added to the stabilizing solution to improve the storage stablility of photographic images.

In the above stabilizing solution for negatives, all sorts of additives, for example, droplet irregularity preventive materials, pH adjusters, hardening agents, organic solvents, moisture conditioners and color-toning agents may be added if necessary. These additives improve and expand the effect of processing.

A stilbene type brightening agent may also be used in the color developing solution for color paper and the stabilizing solution.

Components contained in the waste liquor in the above color developing solutions and bleach-fixing solutions and stabilizing solutions are the above various components or additives and the components eluted and accumulated from the photographic materials processed.

C) Collection of photographic process waste liquor :

The collection of the photographic process waste liquor will now be described below.

Once the replenishing solutions are supplied to the photographic processing tanks they are discharged from the processing tanks as overflowed waste liquor and collected in a stock tank 130 (the numeral 131 denotes an instance where a plurality of stock tanks are provided). In the automatic processing machine 110, the liquid overflowed from an upper part of the processing tank is used in the treatment of the photographic process waste liquor.

As a means for transporting the overflowed photographic process waste liquor to the stock tank 130, a simple method is to allow it to naturally drop through a guide tube. However, a heat exchange means may be intermediately disposed to collect the heat energy of the photographic process waste liquor, or, utilizing the heat energy of the automatic processing machine or of the photographic process waste liquor concentration apparatus described later, there may be provided, as denoted by the numeral 112, a means for preliminarily heating the liquor or evaporating water content therefrom before it is collected in the stock tank 130. In some instance, it can be forcedly transported by means of, for example, a pump 123.

There may be also included an instance in which because of differences in components in the photographic process waste liquor for each of photographic processing tanks CD, BF and Sb as mentioned above, all of the corresponding photographic process waste liquors are not treated at one time, but separately treated for each photographic processing tank or by providing stock tanks 130 (131) for each waste liquor in the processing tanks separated into two or three or more groups. In particular, it is effective from the viewpoint of the recovery of silver to separate the waste liquor in the color-developing tank CD from the waste liquor in the bleach-fixing tank BF and washing-substitutive stabilizing tank Sb, and this is also effective when distilled water is reused.

Piping may also be provided to a waste-liquor tank disposed in an existing automatic processing machine or the like to forcedly transport the waste liquor to the stock tank 130. It is further possible to utilize the waste-liquor tank itself in the automatic processing machine as the stock tank 130. In this instance, it is preferred to actuate a pump by detecting the weight of the stock tank 130 and forcedly transport the waste liquor through the piping. It is also preferred to provide a float in the waste-liquor tank and detect the liquid surface at a certain level or higher to actuate the pump. This can be set with ease in an existing automatic processing machine.

In applying this invention, there is included a method in which the liquor overflowed is directly fed, or the liquor is directly fed from the processing tanks, to a treating means without using the stock tank 130.

D) Concentration treatment apparatus :

The concentration treatment apparatus 140 has a means for effecting concentration by evaporation by heating the liquor to a temperature lower than the boiling point thereof. The temperature for the concentration is preferably from 30°C to 95°C, more preferably from 40°C to 80°C, which are temperatures at which the liquor does not boil. It is further preferable to change the temperature for the concentration according to the concentration degree having been made to 1/1.5 or less. For example, the temperature for the concentration is preferably from 30°C to 90°C when the waste liquor has been concentrated to 1/2 or less, and is preferably from 40°C to 80°C when it has been concentrated to 1/3 less.

A means for carrying out the concentration includes a heating means 141, which embraces a treating chamber 142 containing a means for storing the liquor that is being treated or that has been treated (concentrated liquor), and a means 143 for discharging the treated liquor (concentrated liquor) from the treating chamber 142.

It is also preferred to add a gas-adsorbing means 150, for example using filters and adsorbents, and a distilled water reusing means (i.e., condensing means) 160 containing a means for cooling the vapor.

Important in the heating means 141 are a heating source and its transmitting system, which are not limited to particular means. It is preferred to utilize any one of, or combination of two or more of, heating sources such as electricity and gas, whose heat capacity can be readily and quickly changed.

The heating means can be constituted in various manners ranging from a manner in which the liquor is stored and the whole is heated, to a manner in which the liquor is dropped or thrown down (including being sprayed) on a heated belt as exemplified by an over-heated metallic plate, and also to a manner in which the liquor is fed to the heating source at a constant rate and continuously treated.

There further may be available a manner in which the liquor is sprayed in a foggy state inside the treating chamber 142 and heated air is applied to evaporate the liquor, or a manner in which the heated air is charged into the liquor. In such embodiments, it is also desirable to utilize the drying wind in the drying tank D.

When sprayed, it is preferred that the sprayed liquor is carried on the stream of heated circulating air so that a spray drier can be used.

The heating means 141 may be disposed at any position including an upper part, the inside or the outside, of the treating chamber 142 holding the liquor.

When the heating means 141 is in direct contact with the liquor, as in the case of, for example, a heat source built-in quartz tube or a heat transfer plate comprising nichrome wire, it is preferred that the heating means in contact with the waste liquor is a metal having a protective layer comprising, for example, a fluorine resin (as exemplified by Teflon), in order to prevent the concentrated liquor from sticking on its surface which lowers the thermal efficiency.

To vary the heat capacity of the heating means 141, various methods are available. It is preferred to use an electrical control, for example as in the heat source built-in quartz tube or heat transfer plate comprising nichrome wire. Electrical control can be achieved by controlling the voltage and current, but a plurality of heates having the same wattage or having different wattages may be used. In this case an on/off control controls the heat capacity as a whole. In an instance like this, for example, a timer may be used, whereby it is possible to use an automatic change to ensure a maximum wattage at the initial stage of the concentration. It is further possible to freely set the rate of change in the heat capacity to from that in which the change occurs stepwise to that which occurs with a gentle curve.

The constitution of the treating chamber 142 depends on the constitution of the above-described heating means 141. In instances when the treating chamber 142 comprises a hard material that can contain the liquor to be treated or having been treated, an inner vessel is preferably formed of a metal, ceramic or plastic so that the concentrated liquor having been treated can be taken away together with the inner vessel and then thrown away or disposed of.

The gas-adsorbing means 150 is a means by which harmful gases such as hydrogen sulfide, sulfur oxides or ammonia gas (e.g. $H_2S$, $SO_2$ or $NH_3$) contained in the evaporated liquor are separated and collected utilizing, for example, zeolite adsorbents or activated carbon.

In the condensing means 160, the distilled water from evaporation treatment carried out by the concentration apparatus 140 is subjected to a secondary treatment using, for example, activated carbon, reverse osmotic membranes, ultraviolet irradiation or oxidizing agents to obtain distilled water, which is utilized for the photographic processing solutions in the automatic processing machine 110.

The means of this invention for controlling the liquor to temperatures lower than the boiling point includes a means having, besides the above-described heating means 141, at least one of a means for cooling and a means for stopping the heating, and a means for detecting temperature, to keep the temperature constant.

A detecting means 170 for detecting the concentration of the liquor may contain, for example, a light-emitter, a reflector or a light-receptor disposed at a given height in the treating chamber. An instrument for measuring light transmittance (or attenuation) or refractive index is then used. The detection can also be carried out based on the changes in electrical resistance accompanying the changes in density.

E) Controlling :

(1) Feed of photographic process waste liquor from the stock tank 130 to the treatment apparatus 140 :

The manner of feeding the liquor from the stock thank 130 to the treatment apparatus 140 includes a method in which the feeding is carried out at one time at a constant rate (the quantity of waste liquor which can be stored at one time) and a method in which the feeding is continuously carried out at constant rate or at a variable rate. The feeding of the liquor from the stock tank 130 to the treatment apparatus 140 is controlled following the detected information on the quantity of the liquor in the stock tank 130, detected by a sensor 122, or the quantity of the liquor in the treatment apparatus 140, detected by a sensor 124.

In the method in which the feeding is continuously carried out at a constant rate or at a variable rate, the quantity of liquor is adjusted by detecting the temperature of the liquor to be fed and the temperature of the heating means 141 or treating chamber 142 in the treatment apparatus 140. The quantity of the liquor to be fed may be made always constant, and the quantity of the liquor in the treatment apparatus 140 detected to control, to increase or decrease, the heating time using the heating means 141, for example a heater, according to the detected quantity.

(2) Operation of the treatment apparatus 140 :

The treatment apparatus 140 is operated such that the temperature of the liquor during concentration is lower than the boiling point of the liquor. It is preferred to change the temperature according to the degree of concentration already having been made to 1/2 or less. For example, the temperature of the liquor is preferably from 30°C to 90°C when the liquor has been concentrated to 1/2 or less, and ist preferably from 40°C to 80°C when it has been concentrated to 1/3 or less. when the concentration has only been made to 1/1.5 or more, it is preferred, in view of improvement in the evaporation rate, to carry out the concentration at the boiling point of the liquor.

Under such conditions, the treatment of the liquor is carried out according to the difference between the quantity of the liquor to be fed and the quantity of the liquor having been treated, or, alternatively, according to the quantity of the remaining liquor or the quantity of the liquor having been treated and concentrated.

In the treatment according to the method in which the liquor is fed at one time at a constant rate to the treatment apparatus 140, the operation of the treatment apparatus 140 can be controlled based on the treatment time if there has been detected the temperature of the liquor to be fed and the temperature of the heating means 141 or treating chamber 142.

In the above, besides the fact that the progress of the treatment in the treatment apparatus 140 is controlled based on the treatment time, it is preferred to make control by detecting the viscosity of the liquor, the lower limit level of the liquor in the treating chamber 142, the above-mentioned temperatures, pressure, weight and conductivity and stop the treatment apparatus 140 from operating or change to a lower energy operation at the stage that the liquor has been concentrated to a given concentration.

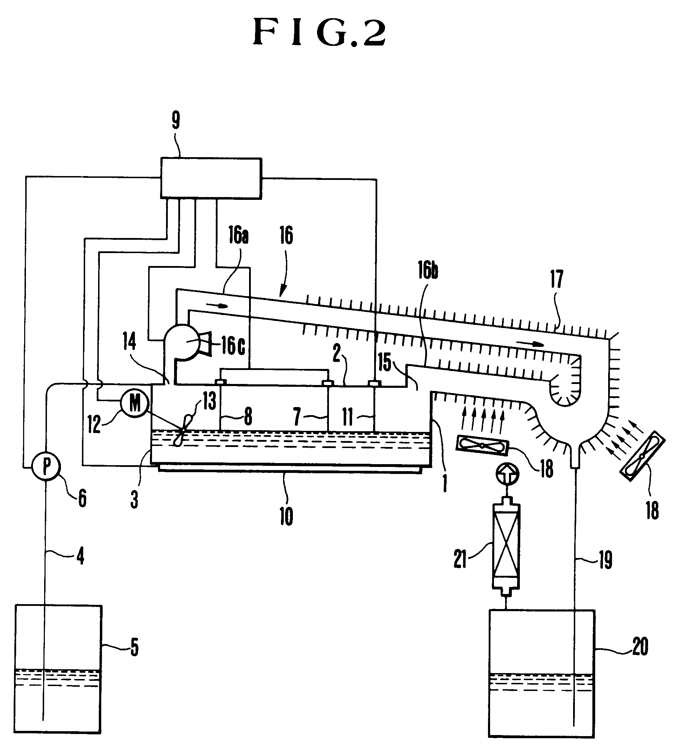

Fig. 2 is a schematic constitutional illustration showing more specifically an apparatus which can be used in this invention.

In the figure, the numeral 1 denotes an evaporation vessel as the evaporation means. The upper part thereof is hermetically closed with a cover 2, and a bag-shaped nylon sheet is detachably provided in its inside, in which the liquor is stored in a given quantity.

The evaporation vessel 1 is connected to a waste-liquor storing thank 5 through piping 4, from which the liquor is fed by a liquid-feed pump. In the inside of the evaporation vessel 1, these are provided an upper liquid level detecting sensor 7 and a lower liquid level detecting sensor 8, determining the liquid level of the liquor. These are provided such that the liquid level can be always kept constant by the liquid-feed pump 6 driven with a controller 9. Also provided at a lower part of the evaporation vessel 1 is a heater 10 as the heating means. The temperature of the heater 10 is controlled by the controller 9 on the basis of the temperature information obtained from a temperature sensor 11 provided inside the evaporation vessel 1. The heater 10 heats the liquor stored in the evaporation vessel 1.

This liquor is stirred with a water vessel 13 driven by a motor 12 so that the evaporation of the liquor can be accelerated and the vapor can be filled in the inside of the evaporation vessel 1. This motor 12 is turned on/off by the controller 9. The controller 9 at the same time controls its rotational speed. The cover 2 of the evaporation vessel 1 is provided on both ends thereof with openings 14 and 15, which are connected to each other by a circulating duct 16 so provided that the vapor in the evaporation vessel 1 can be circulated in the direction shown by an arrow by driving a blower 16c. The circulating duct 16 is so inclined that its opening side 16a at which the blower 16c is provided is higher and its opening side 16b at which the blower 16c is not provided is lower.

Cooling fins 17 are provided around the circulating duct 16, and wind is sent by a cooling fan 18 around the fins so that the vapor is cooled and condensed when it circulates inside the circulating duct. Part of this evaporated component is fed back to the inside of the evaporation vessel 1, where, in order to achieve good evaporation effect, the flow rate of gas feedback is controlled such that the gas flow rate is preferably from 1 litre. to 300 litres per unit time based on 4.19 KJ (1 kcal) heating per unit time using a heater, more preferably from 3 litres. to 200 litres. The temperature of the liquor set by the heater 10 is such that the liquor evaporating in the evaporation vessel 1 does not boil. This temperature is preferably from 30°C to 90°C.

The circulating duct 16, blower 16c and cooling fan 18 constitute the cooling-condensing means and a means for feeding back part of the evaporated component to the evaporating means.

The condensate water obtained in the cooling/condensation is collected in a distilled liquid tank 20 through piping 19, and the distilled liquid tank 20 is connected to open air through container 21 containing activated carbon.

An outline of the process of carrying out the heating and evaporation treatment with this apparatus is described below.

About 20 litres of liquid overflowed from the automatic processing machine is stored in the waste-liquor storing tank 5, and this liquor is fed to the evaporation vessel 1 by the liquid-feed pump 6 driver by the controller 9. When the quantity of the liquor in the evaporation vessel 1 increases and the liquid level is detected by the upper liquid level detecting sensor 8, the operation of the liquid-feed pump 6 is stopped and at the same time the heater 10 is switched on, whereby the heating and evaporation are started. At the same time the motor 12 is driven and the water wheel 13 is rotated to stir the liquor. Thus, the inside of the evaporation vessel 1 is filled with vapor.

This vapor comes out from the opening 14 by driving the blower 16c and is fed to the circulating duct 16. In the circulating duct 16, the vapor is cooled and condensed, and the condensate water is collected in the distilled liquid tank through the piping 19. Then, part of the evaporated component is again fed back to the inside of the evaporation vessel 1 from the circulating duct 16 through the opening 15.

This heating and evaporation decreases the quantity of the waste liquor in the evaporation vessel 1 and lowers the liquid level. Once the liquid level is not detected by the liquid level sensor 7, the liquid-feed pump 26 is again switched on, and the waste liquor in the waste liquor storing tank 5 is fed into the evaporation vessel 1. This operation is repeated.

In this manner, since the temperature in the evaporation vessel 1 at the time of the concentration is controlled so as not to boil the liquor, it is possible to lessen the generation of ill-smelling hydrogen sulfite produced at the time of the concentration by evaporation, or the generation of free sulfur. Moreover, in this concentration treatment, the vapor is cooled and condensed and part of the evaporated component is fed back to the evaporation vessel 1, so that the gas having heat energy can be reused and the evaporation efficiency to the quantity of heat in the heating can be improved.

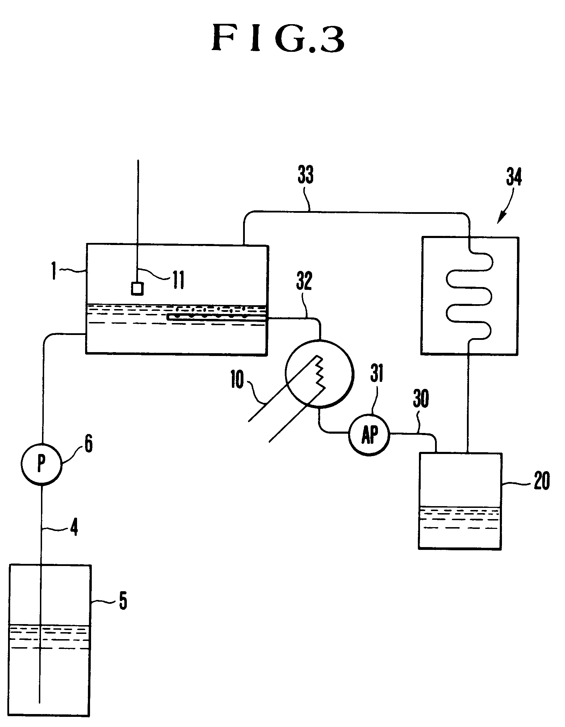

In Fig. 3, the heater 10 and the distilled liquid tank 20 are connected by piping 30, and the air in the distilled liquid tank 20 is sent to the heater 10 by driving an air pump 31 provided on the piping 30. The air heated here passes through piping 32 and is ejected in the liquor in the evaporation vessel 1 to heat the liquor.

The vapor generated in the evaporation vessel 1 is sent to a heat exchanger 34 through a vapor-discharging pipe 33. The condensate water obtained by being cooled and condensed here is collected in the distilled liquid tank 20, and part of the evaporated component is fed back to the evaporation vessel 1 side through the piping 30.

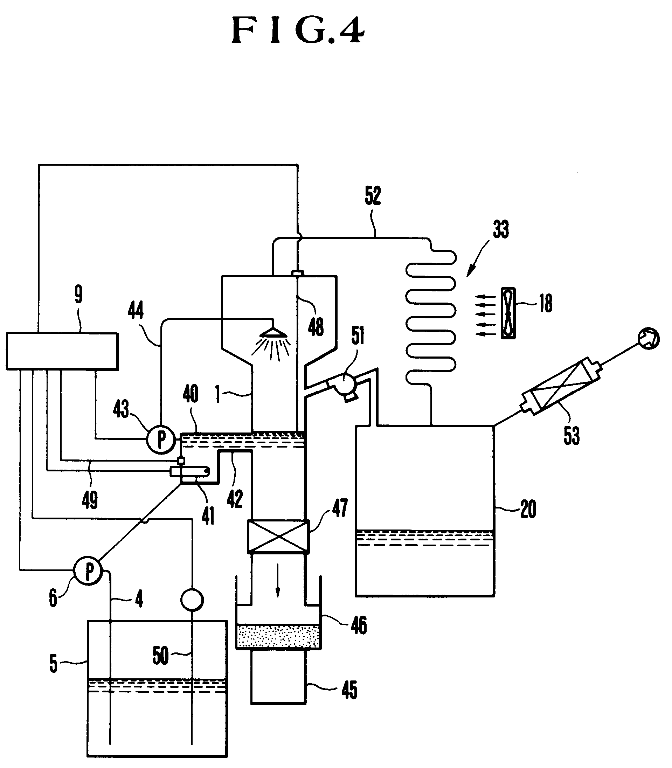

Fig. 4 further illustrates another example, wherein the liquor is fed to an auxiliary evaporation tank 40 by a liquid-feed pump 6, heated there with a heater 41, and fed to an evaporation vessel 1. The heated liquor is further sprayed into the evaporation vessel 1 through piping 44 by a pump 43. At a lower part of the evaporation vessel 1 a sludge receptacle 46 is placed on a pedestal 45 so that the sludge settled in the evaporation vessel 1 by the concentration can be allowed to fall by opening a valve 47 and taken out.

A liquid level sensor 48 is provided inside of the evaporation vessel 1. Once the liquid level is lowered, a liquid-feed pump 6 is driven through a controller 9, and the liquor is fed to the auxiliary evaporation tank 40 so that a given liquid level may be recovered. In this auxiliary evaporation tank 40, a temperature sensor 49 is provided to control the heater 41 so as to give a prescribed temperature. A liquid level sensor 50 is also provided in the waste liquid storing tank 5.

The vapor in this evaporation vessel 1 is fed to a heat exchanger 33 through a vapor discharging pipe 52 by actuating a blower 51. The condensate water obtained by being cooled and condensed here is collected in a distilled liquid tank 20, and part of the vapor component is fed back to the inside of the evaporation vessel 1. The distilled liquid tank 20 is connected to open air through container 53 containing activated carbon.

Examples

After imagewise printing on a commercially available color photographic paper, continuous processing was carried out using the following processing steps and processing solutions :

```
Standard processing steps:
(1) Color developing        40°C              3 min
(2) Bleach-fixing           38°C              1 min  30 s
(3) Stabilizing             25°C to 35°C      3 min
(4) Drying                  75°C to 100°C     about 2 min


Composition of processing solutions:
[Color developing tank solution]
Ethylene glycol                                       15 ml
Potassium sulfite                                      2.0 g
Potassium bromide                                      1.3 g
Sodium chloride                                        0.2 g
Potassium carbonate                                   24.0 g
3-Methyl-4-amino-N-ethyl-N-(β-
methanesulfonamidoethyl)aniline sulfate                5.5 g
Brightening agent (a 4,4'-diaminostilbenedisulfonic acid
derivative)                                            1.0 g
Hydroxylamine sulfate                                  3.0 g
1-Hydroxyethylidene-1,1-diphosphonic acid              0.4 g
Hydroxyethyliminodiacetic acid                         5.0 g
Magnesium chloride·hexahydrate                         0.7 g
Disodium 1,2-dihydroxybenzene-3,5-disulfonate          0.2 g
```

Made up to 1 litre by adding water, and adjusted to pH 10.20 using potassium hydroxide and sulfuric acid.

[Color developing replenishing solution]

| | |
|---|---:|
| Ethylene glycol | 20 ml |
| Potassium sulfite | 3.0 g |
| Potassium carbonate | 24.0 g |
| Hydroxyamine sulfate | 4.0 g |
| 3-Methyl-4-amino-N-ethyl-N-(β-methanesulfonamidoethyl)aniline sulfate | 7.5 g |
| Brightening agent (a 4,4'-diaminostilbenedisulfonic acid derivative) | 2.5 g |
| 1-Hydroxyethylidene-1,1-diphosphonic acid | 0.5 g |
| Hydroxyethyliminodiacetic acid | 5.0 g |
| Magnesium chloride·hexahydrate | 0.8 g |
| Disodium 1,2-dihydroxybenzene-3,5-disulfonate | 0.3 g |

Made up to 1 litre by adding water, and adjusted to pH 10.70 using potassium hydroxide and sulfuric acid.

[Bleach-fixing tank solution]

| | |
|---|---:|
| Ethylenediaminetetraacetic acid ferric ammonium dihydrate | 60.0 g |
| Ethylenediaminetetraacetic acid | 3.0 g |
| Ammonium thiosulfate (a 70 % solution) | 100 ml |
| Ammonium sulfite (a 40 % solution) | 27.5 ml |

Made up to 1 litre by adding water, and adjusted to pH 7.1 using potassium carbonate or glacial acetic acid.

[Bleach-fixing replenishing solution A]

| | |
|---|---:|
| Ethylenediaminetetraacetic acid ferric ammonium dihydrate | 260.0 g |
| Potassium carbonate | 42.0 g |

Made up to 1 litre by adding water.
The pH of this solution is adjusted to 6.7 ± 0.1 with acetic acid or ammonia water.

[Bleach-fixing replenishing solution B]

| | |
|---|---:|
| Ammonium thiosulfate (a 70 % solution) | 250.0 ml |
| Ammonium sulfite (a 40 % solution) | 25.0 ml |
| Ethylenediaminetetraacetic acid | 17.0 g |
| Glacial acetic acid. | 85.0 ml |

Made up to 1 litre by adding water.
The pH of this solution is adjusted to 5.3 ± 0.1 with acetic acid or ammonia water.

```
[Wahing-substitutive stabilizing tank solution and
replenishing solution]
Ethylene glycol                                      1.0 g
2-Methyl-4-isothiazolin-3-one                        0.20 g
1-Hydroxyethylidene-1,1-diphosphonic acid (a 60 %
solution)                                            1.0 g
Ammonia water (a 25 % aqueous solution of ammonium
hydroxide)                                           2.0 g
```

Made up to 1 litre using water, and adjusted to pH 7.0 using 50% sulfuric acid.

The tanks of an automatic processing machine were filled with the above color developing tank solution, bleach-fixing tank solution and stabilizing tank solution to carry out a running test while processing a sample of the above commercially available color photographic paper while supplying the above color developing replenishing solution, bleach-fixing replenishing solutions A and B and stabilizing replenishing solution through a bellows pump at intervals of 3 minutes. The replenishing amounts were such that the color developing tank was replenished in an amount of 190 ml, the bleach-fixing tank was replenished in an amount of 50 ml for each of the bleach-fixing replenishing solutions A and B, and the stabilizing tank was replenished with the washing-substitutive stabilizing replenishing solution in an amount of 250 ml, each per 1 $m^2$ of the color photographic paper. The stabilizing tank in the automatic processing machine comprised first to third stabilizing tanks in the direction of the flow of the sample. The replenishing was carried out from the last tank, the solution overflowed from the last tank was flowed into the tank anterior thereto and further the solution overflowed therefrom was flowed into the tank further anterior thereto (a multi-tank counter-current system).

The continuous processing was carried out until the total replenishing amount of the washing-substitutive stabilizing solution was 3 times of the capacity of the stabilizing tank.

The following experiments were then carried out in relation to the evaporation control made by detecting the degree of progress of the photographic process waste liquor treatment.

Example 1

Evaporation treatments were carried out using 4 litres of photographic process waste liquor to be treated, initially of a heater to 500 W, and using 4 controlling temperatures, to obtain the results shown in Table 1.

Shortcut of the piping of the condensing means 160 resulted in leak of vapor from the stock tank holding the distillate (condensate liquid), also causing the generation of ill smell and generation of sulfur before the degree of concentration reached the values in the above table. The smell of ammonia was so serious that the work environment was inferior to that before the start of the evaporation.

Table 1

| No. | Control-ling tempe-rature | Generation of ill smell, sulfur* | Clogging of pipe | Evaporation time (up to 1/10 concent-ration) |
|---|---|---|---|---|
| 1 | No con-trol (105 – 110°C) | 1/5 concent-ration | 1/8 concent-ration | – |
| 2 | 95°C | 1/8 concent-ration | 1/10 concent-ration | 10 hrs |
| 3 | 90°C | 1/10 concent-ration | 1/12 concent-ration | 14 hrs |
| 4 | 80°C | 1/16 concent-ration | ** | 25 hrs |

* Generation of sulfur caused yellowing of the distillate (condensate liquid), accompanied by formation of precipitates.

** No clogging occurred even if the evaporation was carried out until the liquid was almost concentrated to dryness.

Example 2

Using a 500 W heater 4 litres of photographic process waste liquor were concentrated by evaporation. No temperature control was made until 3 litres of distillate were formed. The temperature was controlled to 80°C when 3 litres of the liquor were formed. As a result, the generation of ill smell and sulfur and the clogging of pipes were the same as in No. 4 of Example 1, but the time for evaporation up to 1/10 concentration was shortened to 12 hours.

Similar results were obtained when the quantity of the distillate was detected by a liquid level sensor and the temperatures set were automatically changed by a relay.

Example 3

The temperature was controlled to 90°C when 3 litres of the distillate of Example 2 were formed, and further controlled to 80°C when 6.55 litres of the distillate were formed. As a result, the evaporation time was further shortened to 10 hours.

Example 4

In the treating chamber, 2 litres of photographic process waste liquor were charged, and additional liquor was supplied so as to keep the liquid level constant.

At this time, a liquid level sensor was provided in the waste liquor storing tank such that the supply amounts for 8 litres, 18 litres and 20 litres can be detected. The apparatus was set up such that temperature was not controlled until 8 litres were supplied, controlled to 90°C after the supply of 6 litres, and controlled to 80°C after the supply of 16 litres. No generation of ill-smelling sulfur was caused even when 18 litres were supplied.

## Example 5

Using a 500 W heater, 4 litres of overflowed liquid of a bleach-fixing solution were treated using 4 controlling temperatures to obtain the results shown in Table 2.

Table 2

| No. | Control-ling tempe-rature | Generation of ill smell, sulfur* | Clogging of pipe | Evaporation time (up to 1/10 concent-ration) |
|---|---|---|---|---|
| 5 | No con-trol | 1/1.5 concent-ration | 1/5 concent-ration | – |
| 6 | 95°C | 1/3 concent-ration | 1/6 concent-ration | – |
| 7 | 90°C | 1/6 concent-ration | 1/10 concent-ration | 15 hrs |
| 8 | 80°C | 1/10 concent-ration | ** | 27 hrs |

*, **: Same as in Example 1

## Example 6

Using 4 litres of overflowed bleach-fixing solution and a 500 W heater, the apparatus was set up such that:
the temperature was not controlled until 1.3 litres of distillate were formed ;
the temperature was controlled to 90°C until 3.2 litres of distillate were formed ; and
the temperature was controlled to 80°C after 3.2 litres of distillate were formed.
As a result, the time up to 1/10 concentration was shortened to 12 hours.

## Example 7

In Examples 1 and 5, air blowing was carried out as a cooling means and temperatures at the time of evaporation were set to 95°C and 90°C to obtain the same results as in Examples 1 and 5, but with a 1.5 to 2 times improvement in the evaporation rate.

## Example 8

Using 4 litres of photographic process waste liquor and a 500 W heater treatment was carried out with a direct connection to a distillate tank, with or without the condensing means 160. Results are shown in Table 3.

## Table 3

| | Evaporation temperature (°C) | Evaporation rate (1/h) |
|---|---|---|
| Condensing means was used | b.p. 105 – 110<br>95<br>90<br>80 | 0.5<br>0.4<br>0.2<br>0.1 |
| No condensing means was used | b.p. 105 – 110<br>95<br>90<br>80 | 0.3<br>0.2<br>0.12<br>0.06 |

To the photographic process waste liquor there were previously added 20 g/l of potassium carbonate and 0.25 g/l of anti-foaming agent FS Antifoam 025 (available from Dow-Corning Corp.) and the running test was carried out again.

Example 9

In the apparatus shown in Fig. 2, using a 1 kW heater the temperature of the liquor was changed by turning on/off the heater. The blower used had a capacity of 10 m³/h. Results obtained are shown in Table 4.

## Table 4

| Stirring wheel | Photographic process waste liquor temperature | Degree of concentration at which hydrogen sulfide was generated | Time required for producing 1 litre of distillate | Electric power used |
|---|---|---|---|---|
| OFF | 100 – 110°C | 1/3 | 60 min | 1 Kw |
| ON | 80°C<br>60°C<br>40°C<br>30°C<br>25°C | 1/8<br>1/15 or less<br>ditto<br>ditto<br>– | 70 min<br>80 min<br>3 h<br>5 h<br>10 h or more | 0.9 Kw<br>0.75 Kw<br>0.4 Kw<br>0.25 Kw<br>0.07 Kw |

Thus, the concentration of the liquor makes it possible to retard the generation of hydrogen sulfide, which is a source of ill smell.

Example 10

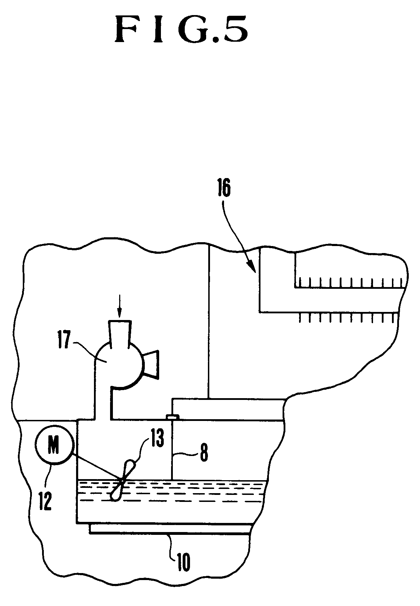

The liquor of Example 9 and the apparatus illustrated in Figs. 2 and 5 were used. Gas flow rate was measured at the pipe just fronting the blower when the blower was present or not present.

For comparison, tests were carried out using an apparatus shown in Fig. 5 comprising a modified blower section not having a mechanism by which the vapor is fed back. Results obtained are shown in Table 5.

In this invention, a high degree of concentration can be achieved without generation of ill smell, obtaining good results,

## Table 5

| Apparatus | Gas flow rate, Presence or absence of blower | Degree of concentration at which hydro-gen sulfide was generated | |
|---|---|---|---|
| Fig. 2 | absence | 1/3 | Comparative |
| | $10m^3/h$ | 1/12 | Present invention |
| Fig. 5 | absence | 1/3 | Comparative |
| | $10m^3/h$ | 1/2.5 | Comparative |

Example 11

The temperatures of the liquor were maintained to 50°C to 70°C by controlling a heater and a stirring motor to obtain the results shown in Table 6.

Table 6

| Gas flow rate | Ratio of heat quantity to gas flow rate | | Degree of concentration at which hydrogen sulfide was generated | Evaporation efficiency |
|---|---|---|---|---|
| zero | zero | | 1/7 | 32% |
| 300 ℓ/hr | 0.5 ℓ/kcal | (0.12 L/kJ) | 1/9 | 38% |
| 300 ℓ/hr | 1.0 ℓ/kcal | (0.24 L/kJ) | 1/12 | 52% |
| 2000 ℓ/hr | 3.0 ℓ/kcal | (0.72 L/kJ) | 1/15 or less | 68% |
| 2000 ℓ/hr | 10 ℓ/kcal | (2.39 L/kJ) | ditto | 76% |
| 10 m³/hr | 20 ℓ/kcal | (4.77 L/kJ) | ditto | 77% |
| 100 m³/hr | 100 ℓ/kcal | (23.9 L/kJ) | ditto | 73% |
| 300 m³/hr | 300 ℓ/kcal | (71.6 L/kJ) | ditto | 71% |
| 300 m³/hr | 1000 ℓ/kcal | (239 L/kJ) | ditto | 50% |
| 300 m³/hr | 1500 ℓ/kcal | (358 L/kJ) | ditto | 43% |

17

The 100% theoretical evaporation quantity was based on the quantity of heat to determine the evaporation efficiency. The quantity of heat in the heating was determined by calculating 1 kW/h, as 860 kcal (3600 kJ).

As is clear from Examples 9 to 11, the vapor produced by concentration of the liquor is condensed by the condensing means, part of the thus condensed evaporation component is fed back to the evaporation means, and the temperature of the liquor is controlled such that it does not boil, so that it is possible to prevent generation of hydrogen sulfide or free sulfur which is a source of ill smell during the progress of the concentration.

According to the method of this invention, it is possible to achieve the objects previously mentioned. In particular, the effect of making it possible to prevent as much as possible the ill smell that generates at the time of concentration can be expected from the positive control of the temperature for the concentration of the liquor such that it does not boil and also the condensation of the vapor generated at the time of concentration. At the same time thereby the evaporation rate in the concentration can be improved and evaporation at temperatures lower than the boiling point can be accelerated.

In addition, increase in the pressure in the apparatus can be lessened, the gas may not leak outside, sage operation becomes possible, and it becomes unnecessary to provide a means for preventing the ill-smelling gas from leaking outside.

## Claims

1. A method of concentrating photographic process waste liquor which comprises heating the liquor to evaporate at least part thereof, characterised in that the evaporation is initially carried out at the boiling point of the liquor and subsequently carried out at a temperature lower than the boiling point of the liquor, and the vapour produced by the evaporation is condensed.

2. A method according to claim 1 wherein part of the evaporated component is fed back into the liquor being evaporated.

3. A method according to claim 2 wherein the part of the evaporated component is fed back in the form of a gas.

4. A method according to claim 3 wherein the gas flow rate of the evaporated component fed back is from 1 litre to 300 litres per 4.19 kJ provided by the heating means.

5. A method according to any one of the preceding claims wherein the liquor is concentrated to 1/2 or more.

6. A method according to claim 5 wherein the temperature of the liquor is altered when the liquor is concentrated to 1/2 or more.

## Patentansprüche

1. Verfahren zum Konzentrieren von flüssigem Abfall aus einem photographischen Verfahren durch Erwärmen der flüssigen Masse zur Verdampfung zumindest eines Teils derselben, dadurch gekennzeichnet, daß die Verdampfung zunächst am Kochpunkt der flüssigen Masse und danach bei einer Temperatur unterhalb des Kochpunkts der flüssigen Masse erfolgt und der bei der Verdampfung entstandene Dampf kondensiert wird.

2. Verfahren nach Anspruch 1, dadurch gekennzeichnet, daß ein Teil der verdampften Komponente in die einer Verdampfung unterworfene flüssige Masse rückgeführt wird.

3. Verfahren nach Anspruch 2, dadurch gekennzeichnet, daß der Teil der verdampften Komponente in Form eines Gases rückgeführt wird.

4. Verfahren nach Anspruch 3, dadurch gekennzeichnet, daß die Gasströmungsgeschwindigkeit der rückgeführten verdampften Komponente 1-300 l pro durch die Erwärmungseinrichtung gelieferte 4,19 kJ beträgt.

5. Verfahren nach einem der vorhergehenden Ansprüche, dadurch gekennzeichnet, daß die flüssige Masse auf die Hälfte oder (noch) stärker konzentriert wird.

6. Verfahren nach Anspruch 5, dadurch gekennzeichnet, daß die Temperatur der flüssigen Masse geändert wird, wenn die flüssige Masse auf die Hälfte oder (noch) stärker konzentriert ist.

## Revendications

1. Procédé de concentration de liqueurs usées de procédés photographiques, qui comprend le chauffage de la liqueur pour en évaporer au moins une partie, caractérisé en ce que l'évaporation est effectuée initialement au point d'ébullition de la liqueur, et ensuite effectuée à une température inférieure au point d'ébullition de la liqueur, et en ce que la vapeur produite par l'évaporation est condensée.

2. Procédé selon la revendication 1, dans lequel une partie du composant évaporé est recyclé dans la liqueur en cours d'évaporation.

3. Procédé selon la revendication 2, dans lequel la partie du composant évaporé est recyclé sous forme de gaz.

4. Procédé selon la revendication 3, dans lequel le débit de gaz du composant évaporé recyclé est de 1 litre à 300 litres par 4,19 kJ fournis par les moyens de chauffage.

5. Procédé selon l'une quelconque des revendications précédentes, dans lequel la liqueur est concentrée à 1/2 ou davantage.

6. Procédé selon la revendication 5, dans lequel la température de la liqueur est modifiée quand la liqueur est concentrée à 1/2 ou davantage.

# FIG.1

EP 0 292 282 B1

# FIG.2

# FIG.3

# F I G.4

# F I G.5